# EUROPÄISCHE PATENTSCHRIFT

(11) **EP 3 818 466 B1**
(45) Veröffentlichungstag und Bekanntmachung des Hinweises auf die Patenterteilung: **28.02.2024**
(21) Anmeldenummer: 19729278.2
(22) Anmeldetag: 06.06.2019
(51) Int. Cl.: G06V 20/58, G06V 10/10

(54) **SCHNELLE ERKENNUNG GEFÄHRLICHER ODER GEFÄHRDETER OBJEKTE IM UMFELD EINES FAHRZEUGS**
QUICK IDENTIFICATION OF DANGEROUS OR ENDANGERED OBJECTS IN THE SURROUNDINGS OF A VEHICLE
RECONNAISSANCE RAPIDE D'OBJETS DANGEREUX OU MENACÉS DANS L'ENVIRONNEMENT D'UN VÉHICULE

(30) Priorität: 04.07.2018 DE 102018211042
(43) Veröffentlichungstag der Anmeldung: 12.05.2021
(73) Patentinhaber: Robert Bosch GmbH, 70442 Stuttgart (DE)
(72) Erfinder: MARX, Jochen, 31180 Emmerke (DE); PFEIFFER, Michael, 71032 Boeblingen (DE); LANGE, Oliver, 30966 Hemmingen (DE)
(86) Internationale Anmeldenummer: PCT/EP2019/064875
(87) Internationale Veröffentlichungsnummer: WO 2020/007567

(56) Entgegenhaltungen:
- DE-A1-102008 062 915
- MILDE MORITZ B ET AL: "Bioinspired event-driven collision avoidance algorithm based on optic flow", 2015 INTERNATIONAL CONFERENCE ON EVENT-BASED CONTROL, COMMUNICATION, AND SIGNAL PROCESSING (EBCCSP), IEEE, 17. Juni 2015 (2015-06-17), Seiten 1-7, XP032795378, DOI: 10.1109/EBCCSP.2015.7300673 [gefunden am 2015-10-19]
- SOHEILA DADELAHI: "Obstacle Displacement Prediction for Robot MotionPlanning and Velocity Changes", INTERNATIONAL JOURNAL OF INFORMATION AND ELECTRONICS ENGINEERING : IJIEE, 1. Januar 2013 (2013-01-01), XP55616279, Singapore ISSN: 2010-3719, DOI: 10.7763/IJIEE.2013.V3.315
- PATRICK LICHTSTEINER ET AL: "A 128128 120 dB 15 s Latency Asynchronous Temporal Contrast Vision Sensor", IEEE JOURNAL OF SOLID-STATE CIRCUITS, IEEE, USA, vol. 43, no. 2, 1 February 2008 (2008-02-01), pages 566-576, XP011200748, ISSN: 0018-9200, DOI: 10.1109/JSSC.2007.914337

## Beschreibung

Die vorliegende Erfindung betrifft ein Verfahren, mit dem Objekte im Umfeld eines Fahrzeugs schnell dahingehend analysiert werden können, ob sie für das Fahrzeug gefährlich werden können oder umgekehrt durch das Fahrzeug gefährdet sind.

### Stand der Technik

Eine Analyse vergangener Verkehrsunfälle hat gezeigt, dass ein großer Prozentsatz dieser Unfälle hätte vermieden werden können, wenn zur Abwendung nur ein wenig mehr Zeit zur Verfügung gestanden hätte. Eine Sekunde oder sogar noch weniger an zusätzlicher Zeit hätte in vielen Fällen den Unterschied gemacht.

Fahrzeuge werden zunehmend mit Assistenzsystemen ausgestattet, die im Falle einer drohenden Kollision automatisch reagieren und beispielsweise eine Notbremsung einleiten. Derartige automatische Reaktionen sind außerdem notwendig, wenn Fahrzeuge sich zumindest teilweise automatisiert im öffentlichen Straßenverkehr bewegen sollen.

Um möglichst viel Reaktionszeit einzusparen, schlägt die US 2016/096 477 A1 vor, einen Sensor mit ereignisbasierten lichtempfindlichen Pixeln einzusetzen. Sobald die auf ein solches ereignisbasiertes Pixel einfallende Lichtintensität sich um mindestens einen vorgegebenen Prozentsatz ändert, gibt der Sensor ein diesem Pixel zugeordnetes Ereignis aus. Im Gegensatz zu einem kamerabasierten Sensor muss nicht die Aufnahme eines kompletten Bildes abgewartet werden.

MILDE MORITZ B ET AL: "Bioinspired event-driven collision avoidance algorithm based on optic flow", 2015 INTERNATIONAL CONFERENCE ON EVENT-BASED CONTROL, COMMUNICATION, AND SIGNAL PROCESSING (EBCCSP), IEEE, verwenden einen dynamischen Bildsensor (DVS), der ereignisbasierte Informationen über zeitliche Veränderungen des Kontrasts an jedem Pixelstandort liefert. Um den optischen Fluss aus diesen Informationen zu extrahieren, wird ein Algorithmus zur Ebenenanpassung verwendet, der die relative Geschwindigkeit in einem kleinen räumlich-zeitlichen Quader schätzt. Die Tiefenstruktur wird aus dem translatorischen optischen Fluss unter Verwendung lokaler Eigenschaften der Netzhaut abgeleitet. Aus der ereignisbasierten Tiefenstruktur der Umgebung wird dann eine Kollisionsvermeidungsrichtung errechnet. Das System wurde erfolgreich auf einer Roboterplattform im offenen Kreislauf getestet.

SOHEILA DADELAHI: "Obstacle Displacement Prediction for Robot Motion Planning and Velocity Changes", INTERNATIONAL JOURNAL OF INFORMATION AND ELECTRONICS ENGINEERING, stellen eine Methode zur Planung der Bewegungsabläufe für autonome mobile Roboter vor, die sich in einer unbekannten dynamischen Umgebung sicher bewegen sollen. Die Umgebung kann eine Vielzahl von Hindernissen beliebiger Form enthalten, und die Hindernisse dürfen sich bewegen. Es wird ein Ansatz zur Lösung des Bewegungsplanungsproblems beschrieben, indem neuronale Netze basierende Technik verwendet werden, um die Bewegung der Hindernisse zu modellieren und ihre Bewegungen vorherzusagen. Auf der Grundlage der Vorhersage der Hindernisbahn um einen Schritt voraus, wird eine regelbasierte Technik zur Vermeidung von Hindernissen durch Anpassung der Geschwindigkeit des Roboters vorgeschlagen.

### Offenbarung der Erfindung

Im Rahmen der Erfindung wurde ein Verfahren zur Erkennung potentiell gefährlicher oder gefährdeter Objekte im Umfeld eines Fahrzeugs entwickelt. In diesem Zusammenhang ist unter "gefährlich" insbesondere zu verstehen, dass eine Kollision des Objekts mit dem Fahrzeug droht und zu Nachteilen für das Fahrzeug, für dessen Insassen und/oder für andere Verkehrsteilnehmer führen kann. Unter "gefährdet" ist insbesondere zu verstehen, dass eine Kollision des Objekts mit dem Fahrzeug droht und zu Nachteilen für das Objekt selbst führen kann.

Ein Bereich des Umfelds wird mit mindestens einem ereignisbasierten Sensor erfasst, wobei der ereignisbasierte Sensor lichtempfindliche Pixel aufweist und wobei eine relative Änderung der auf ein Pixel einfallenden Lichtintensität um mindestens einen vorgegebenen Prozentsatz den Sensor dazu veranlasst, ein diesem Pixel zugeordnetes Ereignis auszugeben. Der erfasste Bereich kann beispielsweise ein Bereich sein, auf den das Fahrzeug aktuell zusteuert. Insbesondere kann das Umfeld des Fahrzeugs durch mehrere ereignisbasierte Sensoren abgedeckt sein, von denen zu jedem Zeitpunkt diejenigen genutzt werden, die für die aktuelle Fahrtrichtung (insbesondere Vorwärtsfahrt oder Rückwärtsfahrt) relevant sind. Es können aber auch beispielsweise seitliche Bereiche überwacht werden. Bei einem auf dem Standstreifen haltenden Fahrzeug kann auch beispielsweise der rückwärtige Verkehrsraum daraufhin überwacht werden, ob ein Fahrzeug den rechten Fahrstreifen in Richtung Standstreifen zu verlassen droht.

Vom Sensor ausgegebene Ereignisse werden mindestens einem Objekt in dem Bereich zugeordnet. Objekte können insbesondere aus dem Datenstrom der Ereignisse selbst ermittelt werden. Beispielsweise können zunächst abstrakt die voneinander unterscheidbaren und sich unabhängig voneinander bewegenden Objekte als solche detektiert werden, um dann im nächsten Schritt nach Objekttypen (etwa Fußgänger, Radfahrer oder anderes Kraftfahrzeug) klassifiziert zu werden. Es kann aber alternativ oder auch in Kombination jede andere Quelle für die Information, welche Objekte im Umfeld des Fahrzeugs vorhanden sind, herangezogen werden. Beispielsweise können die Ereignisse auch Objekten zugeordnet werden, die zuvor unter Nutzung eines Kamerasensors detektiert und klassifiziert wurden. Weiterhin ist es möglich, dass ein und dasselbe Ereignis mehreren Objekten zugeordnet wird, beispielsweise, wenn sich die Objekte aus der Perspektive des ereignisbasierten Sensors überlappen. Zugleich ist es aber nicht zwingend erforderlich, dass jedes vom Sensor ausgegebene Ereignis mindestens einem Objekt zugeordnet wird. Es können auch Ereignisse ohne Zuordnung bleiben.

Für mindestens ein Objekt, dem Ereignisse zugeordnet sind, werden die dem Objekt zugeordneten Ereignisse auf gegenwärtige Bewegungen des Objekts analysiert. Diese gegenwärtigen Bewegungen sind Insichbewegungen des Objekts, oder auch andere Bewegungen, die sich auf einer im Vergleich zur typischen Framerate von Kamerasensoren kurzen Zeitskala abspielen. In diesem Zusammenhang umfasst der Begriff der Insichbewegung Bewegungen, die die Position des Objekts als Ganzes im Raum unverändert lassen. Dies sind insbesondere Bewegungen, bei denen mindestens ein Punkt des Objekts im Raum fix bleibt.

Aus den gegenwärtigen Bewegungen wird eine bevorstehende Bewegung des Objekts, und/oder eine bevorstehende Zustandsänderung des Objekts, ermittelt. Die bevorstehende Bewegung kann insbesondere beispielsweise eine Fortbewegung des Objekts als Ganzes sein. Jedoch ist es beispielsweise auch möglich, aus einer ersten Insichbewegung zunächst eine bevorstehende zweite Insichbewegung zu ermitteln und erst aus dieser zweiten Insichbewegung eine bevorstehende Fortbewegung des Objekts als Ganzes zu folgern. Der Begriff der Zustandsänderung umfasst beispielsweise jede Veränderung des Objekts, die keine Fortbewegung des Objekts als Ganzes ist, aber aus Sicht des Fahrzeugs gleichwohl relevant ist. Beispielsweise kann eine Bewegung eines Kofferraumdeckels an einem vorausfahrenden PKW ankündigen, dass Ladung aus dem Kofferraum auf die Fahrbahn fallen wird. Ebenso kann etwa das Biegen oder Brechen einer Halterung, mit der eine Dachbox oder anderes Gepäck am vorausfahrenden PKW befestigt ist, den baldigen Verlust dieses Gepäcks ankündigen.

Es wurde erkannt, dass viele Bewegungen oder Zustandsänderungen von Objekten nur scheinbar völlig überraschend kommen, sich in Wahrheit jedoch durch entsprechende Insichbewegungen dieser Objekte oder auch andere Bewegungen ankündigen, die sich auf einer im Vergleich zur Framerate von Kamerasensoren kurzen Zeitskala abspielen. So ändert sich beispielsweise bei einem gehenden Menschen die Schrittlänge, oder auch die Frequenz der Pendelbewegung der Arme, bevor sich die Geschwindigkeit des Menschen merklich erhöht. Ein Radfahrer wird aufhören zu treten, bevor er sein Fahrrad abbremst, und seine Trittgeschwindigkeit beschleunigen, bevor das Fahrrad als Ganzes merklich beschleunigt. Weiterhin muss sich ein Mensch, um in eine andere Richtung gehen zu können, in der Regel um seine eigene Achse drehen, um sich in die gewünschte Richtung auszurichten und dann seinen Weg in diese Richtung fortsetzen zu können. Somit wird mindestens eine Insichbewegung als gegenwärtige Bewegung des Objekts gewählt.

Diese Erkenntnis ist nicht auf belebte Objekte beschränkt. So ist beispielsweise auch das Verlieren von Fahrzeugteilen oder Ladung auf der Autobahn, das für den nachfolgenden Verkehr sehr gefährlich ist, bei näherer Betrachtung häufig kein plötzlich hereinbrechendes Ereignis. Vielmehr lösen sich entsprechende Befestigungen meist allmählich, so dass das Fahrzeugteil oder die Ladung zunächst Spiel hat, um durch die Fahrdynamik zu einer Bewegung oder Vibration gegen den Rest des Fahrzeugs angeregt zu werden, bevor die Befestigung schließlich endgültig versagt.

Weiterhin ist die Erkennung auch nicht auf gefährliche Situationen beschränkt, die unabsichtlich entstehen. So kann beispielsweise auch die Insichbewegung, mit der ein Mensch zum Wurf eines Steins auf ein fahrendes Fahrzeug ausholt, erkannt werden.

Somit kann die Ermittlung der bevorstehenden Bewegung, bzw. der bevorstehenden Zustandsänderung, insbesondere die Ermittlung einer jeweils zu Grunde liegenden Intention des Objekts umfassen, ohne hierauf beschränkt zu sein.

Die genannten Insichbewegungen können sehr subtile und zugleich schnelle Bewegungen sein. Daher ist es besonders vorteilhaft, diese Bewegungen mit einem ereignisbasierten Sensor physikalisch zu erfassen. Der ereignisbasierte Sensor liefert einen kontinuierlichen Datenstrom: Jedes Ereignis wird in genau dem Moment, in dem es stattfindet, auch gemeldet. Es wird nicht, wie bei einem Kamerasensor, eine Diskretisierung der Zeit in Form einer Frame-Rate fest vorgegeben. Dies hat zum einen zur Folge, dass die Insichbewegungen wesentlich detaillierter nachverfolgt werden können. Zum anderen kann insgesamt deutlich schneller reagiert werden, also auch in weniger als der Zeit, die bei einem Kamerasensor zwischen der Aufnahme zweier vollständiger Bilder (Frames) vergeht. Hierzu trägt neben der schnelleren Meldung der Ereignisse auch bei, dass sich die Ereignisse von vornherein nur auf Änderungen der aktuellen Situation beziehen. Es muss keine Zeit darauf verwendet werden, etwa aus dem Vergleich zweier Bilder zunächst auszuwerten, was sich geändert hat.

Im Vergleich zu einem Videodatenstrom eines Kamerasensors ist der Datenstrom der von einem ereignisbasierten Sensor gelieferten Ereignisse sehr stark komprimiert. Daher wird bei der Übertragung der Daten innerhalb des Fahrzeugs und bei der weiteren Verarbeitung jeweils weniger Bandbreite benötigt. Wird als Übertragungskanal beispielsweise ein CAN-Bus mit einer maximalen Bandbreite von 1 Mbitfs genutzt, so wäre dieser mit der Übertragung eines Videodatenstroms in HD-Qualität bereits ausgelastet.

Beispielsweise kann ein Regelwerk, das auf einem Kanon vorgegebener Primitive von Insichbewegungen basiert, die Verbindung zwischen den Insichbewegungen und der vorhergesagten Bewegung bzw. Zustandsänderung herstellen. Dieses Regelwerk kann explizit formuliert sein, aber auch beispielsweise mit maschinellem Lernen trainiert werden. Eine solche Regel kann beispielsweise beinhalten, dass bei einem auf dem Gehweg gehenden Fußgänger die Kombination aus einer veränderten Schrittfrequenz und einer Körperdrehung hin zur Fahrbahn mit hoher Wahrscheinlichkeit zu erwarten ist, dass der Fußgänger die Fahrbahn betreten wird.

Ein Objekt wird in Antwort darauf, dass die bevorstehende Bewegung des Objekts in Konflikt mit der gegenwärtigen oder geplanten Trajektorie des Fahrzeugs steht, als gefährlich oder gefährdet gewertet. Ein Kriterium hierfür ist, dass die bevorstehende Bewegung des Objekts die gegenwärtige oder geplante Trajektorie des Fahrzeugs schneidet oder ihr näher kommt als ein vorgegebener Sicherheitsabstand. Wenn die bevorstehende Bewegung das Fahrzeug nicht in dieser Weise tangiert, so kann sie als unkritisch eingestuft werden. Es können dann beispielsweise weitere Ressourcen für die Verfolgung dieser Bewegung eingespart werden, um diese Ressourcen auf relevantere Bewegungen weiterer Objekte zu fokussieren.

Vorteilhaft wird ein Objekt in Antwort darauf, dass die bevorstehende Zustandsänderung des Objekts ein Potential hat, zumindest einen Teil des Objekts mit der gegenwärtigen oder geplanten Trajektorie des Fahrzeugs in Konflikt zu bringen, als gefährlich oder gefährdet gewertet. Hierunter fällt beispielsweise der besagte sich öffnende Kofferraumdeckel oder die brechende Halterung am vorausfahrenden PKW, weil dann Ladung dieses PKW auf die Trajektorie des eigenen Fahrzeugs gelangen kann.

In einer weiteren besonders vorteilhaften Ausgestaltung werden rigide Objekte von der Analyse auf Insichbewegungen und der anschließenden Auswertung der Insichbewegungen ausgenommen. Dabei können rigide Objekte insbesondere Objekte sein, bei denen Insichbewegungen im Normalfall nicht auftreten oder aus Sicht des Fahrzeugs nicht relevant sind, beispielsweise, weil sie nicht geeignet sind, das Fahrzeug zu gefährden. So ist beispielsweise bis auf den beschriebenen Sonderfall eines bevorstehenden Verlusts von Ladung ein PKW normalerweise als rigides Objekt anzusehen. Bewegt sich etwa der Heckscheibenwischer des vorausfahrenden PKW, ist dies nicht geeignet, die Sicherheit des eigenen Fahrzeugs zu beeinträchtigen, so dass es nicht notwendig ist, Ressourcen für eine Verfolgung dieser Bewegung zu binden.

Insbesondere kann die Ausnahme rigider Objekte von der Analyse auf Insichbewegungen und der anschließenden Auswertung der Insichbewegungen abhängig von der Straßenkategorie der aktuell vom Fahrzeug befahrenen Straße aktiviert werden. Auf diese Weise können die zur Verfügung stehenden Verarbeitungsressourcen priorisiert werden.

So ist beispielsweise im Stadtverkehr das Risiko, dass Ladung verlorengeht und ein nachfolgendes Fahrzeug ernsthaft beschädigt, vergleichsweise gering. Dagegen kommt es häufiger vor, dass Fußgänger unvermittelt vor Fahrzeuge laufen, wobei der Schaden für den Fußgänger gravierend sein kann. Es kann daher beispielsweise vorteilhaft sein, im Stadtverkehr die besagte Ausnahme rigider Objekte zu aktivieren.

Auf der Autobahn sind Fußgänger hingegen eher selten anzutreffen. Hingegen kommt es dort häufiger vor, dass bei hoher Geschwindigkeit Ladung verlorengeht. Daher kann es auf der Autobahn vorteilhaft sein, auch im Normalfall rigide Objekte wie PKW oder LKW auf Insichbewegungen zu überwachen.

In Verallgemeinerung der zuvor beschriebenen Beispiele wird vorteilhaft ein Mensch oder Tier als Objekt gewählt, dessen Insichbewegungen ermittelt werden. Aus einer Änderung der Amplitude und/oder Frequenz einer periodischen Bewegung mindestens eines Körperteils des Menschen oder Tieres, und/oder aus einer Drehung des Menschen oder Tieres oder eines Körperteils hiervon, als Insichbewegung wird eine bevorstehende Bewegung und/oder Zustandsänderung des Menschen oder Tieres ermittelt. Insbesondere hat die Analyse periodischer Bewegungen den Vorteil, dass diese Bewegungen gut von Rauschen unterschieden werden können.

In einer weiteren vorteilhaften Ausgestaltung wird ein Mensch als Objekt gewählt, dessen Insichbewegungen analysiert werden. Aus Bewegungen, die auf eine Kommunikation des Menschen in eine bestimmte räumliche Richtung hindeuten, als Insichbewegungen wird eine bevorstehende Bewegung des Menschen in diese räumliche Richtung ermittelt.

Die Analyse von Menschen als Objekte kann insbesondere in Situationen relevant sein, in denen vorherzusagen ist, ob ein sich auf einem Gehweg in Richtung auf die Fahrbahn bewegender Mensch am Fahrbahnrand stehen bleiben oder zum Überqueren der Straße ansetzen wird. In diesem Zusammenhang kann auch beispielsweise nicht nur das Vorhandensein, sondern auch explizit die Abwesenheit bestimmter Insichbewegungen als Kriterium dafür herangezogen werden, ob eine Kollision droht. Bewegt sich der Fußgänger beispielsweise auf den Fahrbahnrand zu und hat er zuvor den Kopf in Richtung des nahenden Fahrzeugs gedreht, ist die Wahrscheinlichkeit hoch, dass er das Fahrzeug gesehen hat und stehen bleiben wird, so dass keine Notbremsung erforderlich ist. Hat der Fußgänger jedoch den Kopf nicht gedreht und sind beispielsweise weitere Insichbewegungen erkennbar, die auf die Bedienung eines Smartphones hindeuten, so ist davon auszugehen, dass der Fußgänger das Verkehrsgeschehen gar nicht wahrnimmt. In diesem Fall ist eine Notbremsung angezeigt.

Die Analyse von Tieren als Objekte kann insbesondere in Situationen relevant sein, in denen Wildwechsel stattfindet. Ein Tier am Fahrbahnrand gelangt möglicherweise erst Augenblicke vor dem Eintreffen des Fahrzeugs in den Lichtkegel des Fahrlichts, so dass nur wenig Zeit bleibt, die Reaktion des Tiers auf das Licht auszuwerten. Das Licht kann das Tier vor dem Betreten der Fahrbahn warnen, aber auch genauso gut einen Fluchtreflex auslösen, der in einen Sprung auf die Fahrbahn mündet.

Nach dem zuvor Beschriebenen wird vorteilhaft aus einer Insichbewegung des Objekts, die eine Bewegung oder Vibration eines Teils des Objekts gegen den Rest des Objekts umfasst, eine Ablösung des Teils vom Objekt als bevorstehende Zustandsänderung des Objekts ermittelt. Insbesondere Vibrationen, die durch die Fahrdynamik ausgelöst werden, spielen sich häufig auf einer Zeitskala ab, die deutlich schneller ist als die typische Frame-Rate von Kamerasensoren. Anhand der von Kamerasensoren gelieferten Bilder lässt sich somit die Vibration nicht zweifelsfrei feststellen. Im Übrigen kann nicht nur die drohende Ablösung von Fahrzeugteilen oder Ladung erkannt werden. Beispielsweise kann auch die Bewegung von Eis erkannt werden, das sich auf der Plane eines vorausfahrenden LKW gesammelt hat, und es kann daraus gefolgert werden, dass der LKW Klumpen dieses Eises demnächst verlieren könnte.

In einer besonders vorteilhaften Ausgestaltung wird in Antwort darauf, dass ein Objekt als gefährlich oder gefährdet gewertet wird, eine für den Fahrer des Fahrzeugs physikalisch wahrnehmbare Warneinrichtung aktiviert wird, und/oder ein Antriebssystem, Lenksystem und/oder Bremssystem des Fahrzeugs mit einem Eingriff angesteuert wird, um eine Kollision zu vermeiden oder die Folgen einer Kollision abzumildern. Beispielsweise kann ein Abbremsmanöver, und/oder ein Ausweichmanöver eingeleitet werden. Wenn ein vorausfahrendes Fahrzeug Ladung verliert, kann es beispielsweise auch zunächst ausreichen, den Abstand zu diesem vorausfahrenden Fahrzeug zu vergrößern. Wenn es die Verkehrslage zulässt, kann es aber auch beispielsweise sinnvoll sein, das vorausfahrende Fahrzeug zu überholen, um von eventuell verloren gehender Ladung nicht getroffen zu werden.

In einer weiteren besonders vorteilhaften Ausgestaltung werden zur Erkennung von Objekten in dem vom ereignisbasierten Sensor erfassten Bereich, und/oder zur Segmentierung von Objekten in einzelne Teile, zusätzlich Kamerabilder des Bereichs herangezogen. Auf diese Weise können die Stärken beider Arten der Datenaufnahme miteinander kombiniert werden. So ist es zwar grundsätzlich möglich, das Objekt allein auf Grund des Datenstroms der Ereignisse in mehrere Segmente zu unterteilen, doch wird dies dadurch verkompliziert, dass dieser Datenstrom immer nur diejenigen Bereiche des Objekts anzeigt, die sich gerade bewegen. Auf einem Kamerabild ist hingegen das ganze Objekt sichtbar, und es können beispielsweise Farbkontraste zwischen unterschiedlichen Teilen des Objekts ausgenutzt werden. Weiterhin hat ein Kamerasensor systembedingt eine höhere Ortsauflösung als ein ereignisbasierter Sensor.

In diesem Zusammenhang sei angemerkt, dass eine genauere Extraktion von Merkmalen von Objekten, sowie auch eine eventuelle Segmentierung von Objekten in einzelne Teile, der Analyse der gegenwärtigen Bewegungen nicht zwingend vorausgehen muss. Die Analyse kann beispielsweise schon zu einem Zeitpunkt, zu dem die Merkmalsextraktion bzw. Segmentierung noch nicht fertig ist, auf der Basis einer Worst-Case-Abschätzung des Objekttyps laufen und später, wenn das Objekt genauer klassifiziert bzw. segmentiert ist, revidiert werden. Auf diese Weise kann auch die erst später verfügbare zusätzliche Information aus Kamerabildern sinnvoll eingebracht werden.

Grundsätzlich bietet die Kombination eines ereignisbasierten Sensors mit einem kamerabasierten Sensor gerade für sicherheitsrelevante Anforderung im Straßenverkehr den Vorteil, dass eine Diversität bei der Datenerfassung und Datenverarbeitung eingeführt wird. Insbesondere können die jeweils erfassten bzw. ausgewerteten Informationen gegeneinander plausibilisiert werden. So kann beispielsweise der Fall eintreten, dass ein Baum auf der Basis von Kamerabildern fälschlicherweise als Fußgänger klassifiziert worden ist. Wird nun etwa festgestellt, dass das Muster der gegenwärtigen Bewegungen für einen Baum und nicht für einen Fußgänger typisch ist, so kann die Klassifikation entsprechend korrigiert werden.

Die Analyse der Ereignisse auf gegenwärtige Bewegungen, und/oder die Auswertung der gegenwärtigen Bewegungen auf eine bevorstehende Bewegung oder Zustandsänderung, kann insbesondere mit einem künstlichen neuronalen Netzwerk durchgeführt werden. Hier können insbesondere ein Convolutional Neural Network, CNN, oder ein Recurrent Neural Network, RNN, verwendet werden. Die Analyse und Auswertung können aber auch beispielsweise modellbasiert durchgeführt werden.

Der Zeithorizont für die Vorhersage einer bevorstehenden Bewegung oder Zustandsänderung eines Objekts kann beispielsweise zwischen 1 und 3 Sekunden betragen. Die hierfür erforderliche Rechenleistung kann von üblichen Steuergeräten aufgebracht werden.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100;
Figur 2 Beispielhafte Verkehrssituation, in der das Verfahren 100 vorteilhaft wirkt, im Umfeld 2 eines Fahrzeugs 1.

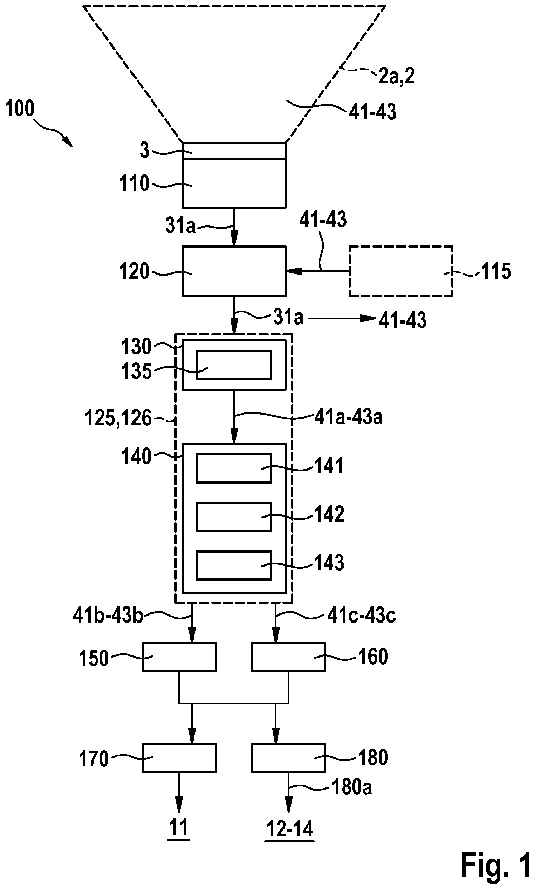

Nach Figur 1 wird in Schritt 110 des Verfahrens 100 zunächst der Bereich 2a des Umfelds 2 eines in Figur 1 nicht eingezeichneten Fahrzeugs 1 mit dem ereignisbasierten Sensor 3 erfasst. Die von dem Sensor 3 gemeldeten Ereignisse 31a werden in Schritt 120 Objekten 41-43 in dem Bereich 2a zugeordnet, wobei zur Identifizierung und/oder Klassifikation der Objekte 41-43 im optionalen Schritt 115 auch Kamerabilder des Bereichs 2a herangezogen werden können.

In Schritt 130 werden die gegenwärtigen Bewegungen 41a-43a der Objekte 41-43 aus den Ereignissen 31a ausgewertet, die den Objekten 41-43 jeweils zugeordnet sind. Dies kann insbesondere gemäß Schritt 135 mit einem künstlichen neuronalen Netzwerk, KNN, geschehen.

In Schritt 140 wird aus den gegenwärtigen Bewegungen 41a-43a, d.h. Insichbewegungen, eine bevorstehende Bewegung 41b-43b, und/oder eine bevorstehende Zustandsänderung 41c-43c, der Objekte 41-43 ausgewertet. Dabei kann beispielsweise gemäß Schritt 141 eine periodische Bewegung mindestens eines Körperteils eines Menschen oder Tieres 42, und/oder aus einer Drehung des Menschen oder Tieres 42 oder eines Körperteils hiervon, als Insichbewegung 42a genutzt werden. Alternativ oder in Kombination kann beispielsweise gemäß Schritt 142 eine auf Kommunikation gerichtete Insichbewegung 42a des Menschen 42 genutzt werden. Alternativ oder in Kombination kann beispielsweise gemäß Schritt 143 eine Bewegung oder Vibration eines in Figur 1 nicht eingezeichneten Teils 41d eines Objekts 41 gegen den Rest des Objekts 41 als Insichbewegung 41a genutzt werden.

Von der Bestimmung 130 der Insichbewegungen 41a-43a und ihrer anschließende Auswertung 140 können gemäß dem optionalen Schritt 125 rigide Objekte ausgenommen werden, wobei diese Ausnahme gemäß dem optionalen Schritt 126 abhängig von der Straßenkategorie der vom Fahrzeug 1 befahrenen Straße aktiviert werden kann.

Gemäß Schritt 150 wird ein Objekt 41-43 als gefährlich gewertet, wenn seine bevorstehende Bewegung 41b-43b in Konflikt mit der gegenwärtigen oder geplanten, in Figur 1 nicht eingezeichneten Trajektorie 1a des Fahrzeugs 1 steht. Gemäß Schritt 160 wird ein Objekt 41-43 als gefährlich gewertet, wenn seine bevorstehende Zustandsänderung 41c-43c das Potential hat, zumindest einen Teil des Objekts 41-43 mit der gegenwärtigen oder geplanten Trajektorie 1a des Fahrzeugs 1 in Konflikt zu bringen.

In Antwort auf die Feststellung, dass ein Objekt 41-43 gefährlich oder gefährdet ist, kann gemäß Schritt 170 eine Warneinrichtung 11 des Fahrzeugs aktiviert werden, und/oder es kann gemäß Schritt 180 ein Antriebssystem 12, ein Lenksystem 13, und/oder ein Bremssystem 14, des Fahrzeugs 1 mit einem Eingriff 180a angesteuert werden.

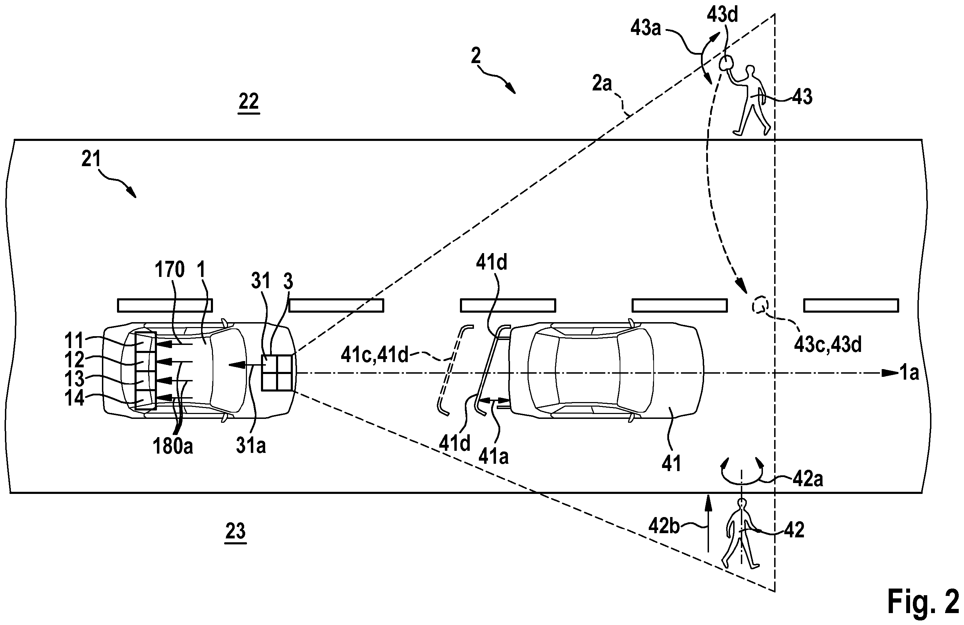

Figur 2 zeigt eine beispielhafte Verkehrssituation im Umfeld 2 eines Fahrzeugs 1. Das Fahrzeug 1 fährt entlang einer Trajektorie 1a auf einer Straße 21, die von Gehwegen 22 und 23 gesäumt ist. Ein Bereich 2a des Umfelds 2 wird mit dem in lichtempfindliche Pixel 31 unterteilten ereignisbasierten Sensor 3 erfasst. In der beispielhaft dargestellten Situation sind drei Objekte 41-43 relevant.

Ein vorausfahrendes Fahrzeug 41 hat eine Stoßstange d, deren unteres Ende von seiner Halterung abgebrochen ist. Durch die Fahrdynamik vollführt die Stoßstange d eine stark übertrieben eingezeichnete Vibrationsbewegung, die als Insichbewegung 41a des Fahrzeugs 41 als Ganzes anzusehen ist. Aus dieser Insichbewegung 41a kann als bevorstehende Zustandsänderung 41c des Fahrzeugs 1 gefolgert werden, dass die Stoßstange d sich demnächst ganz vom Fahrzeug 41 lösen und auf die Straße 21 fallen wird (in Figur 2 gestrichelt eingezeichnet).

Ein erster Mensch 42 auf dem Gehweg 23 vollführt eine Drehung um seine eigene Achse als Insichbewegung 42a. Hieraus kann als bevorstehende Bewegung 42b des Menschen 42 gefolgert werden, dass dieser demnächst auf die Straße 21 laufen wird.

Ein zweiter Mensch 43 auf dem Gehweg 22 vollführt eine Ausholbewegung mit einem Stein 43d als Insichbewegung 43a. Hieraus kann als bevorstehende Zustandsänderung 43c des Menschen 43 gefolgert werden, dass er sich des Steins 43d mit einem Wurf entledigen wird, so dass der Stein 43d auf der Straße 21 landet oder gar das Fahrzeug 1 trifft (in Figur 2 gestrichelt eingezeichnet).

## Patentansprüche

1. Verfahren (100) zur Erkennung potentiell gefährlicher oder gefährdeter Objekte (41-43) im Umfeld (2) eines Fahrzeugs (1) mit den Schritten:
• ein Bereich (2a) des Umfelds (2) wird mit mindestens einem ereignisbasierten Sensor (3) erfasst (110), wobei der ereignisbasierte Sensor (3) lichtempfindliche Pixel (31) aufweist und wobei eine relative Änderung der auf ein Pixel (31) einfallenden Lichtintensität um mindestens einen vorgegebenen Prozentsatz den Sensor (3) dazu veranlasst, ein diesem Pixel (31) zugeordnetes Ereignis (31a) auszugeben;
• vom Sensor (3) ausgegebene Ereignisse (31a) werden Objekten (41-43) in dem Bereich (2a) zugeordnet (120);
• für mindestens ein Objekt (41 -43), dem Ereignisse (31a) zugeordnet sind, werden die dem Objekt (41-43) zugeordneten Ereignisse (31a) auf gegenwärtige Bewegungen (41a-43a) des Objekts (41-43) analysiert (130);
• dadurch charakterisiert, dass aus den gegenwärtigen Bewegungen (41a-43a), die Insichbewegungen sind, eine bevorstehende Bewegung (41 b-43b) des Objekts (41-43) ermittelt (140) wird, wobei die Insichbewegungen Bewegungen sind, die eine Position des Objekts als Ganzes im Raum unverändert lassen,
wobei das Objekt (41-43) in Antwort darauf, dass die bevorstehende Bewegung (41b-43b) des Objekts (41-43) eine gegenwärtige oder geplante Trajektorie (1a) des Fahrzeugs (1) schneidet oder ihr näher als ein vorgegebener Sicherheitsabstand kommt, als potentiell gefährlich oder gefährdet erkannt wird (150).

2. Verfahren (100) nach Anspruch 1, wobei das Objekt kein rigides Objekt (41), bei dem Insichbewegungen nicht auftreten, ist.

3. Verfahren (100) nach Anspruch 1, wobei das Objekt abhängig von einer Straßenkategorie einer vom Fahrzeug befahrenen Straße kein rigides Objekt ist.

4. Verfahren (100) nach einem der Ansprüche 1 bis 3, wobei das Objekt (42) ein Mensch oder Tier ist, und die Insichbewegung (42a) eine Änderung der Amplitude und/oder Frequenz einer periodischen Bewegung mindestens eines Körperteils des Menschen oder Tieres (42), und/oder eine Drehung mindestens eines Körperteils des Menschen oder Tieres (42) ist.

5. Verfahren (100) nach einem der Ansprüche 1 bis 4, wobei das Objekt (42) ein Mensch ist, die mindestens eine Insichbewegung (42a) Bewegungen sind, die auf eine Kommunikation des Menschen (42) in eine bestimmte räumliche Richtung hindeuten, und aus der mindestens einen Insichbewegung (42a) eine bevorstehende Bewegung (42b) des Menschen (42) in diese räumliche Richtung ermittelt wird (142).

6. Verfahren (100) nach einem der Ansprüche 1 bis 5, wobei die Insichbewegung (41a) eine Bewegung oder Vibration eines Teils (41d) des Objekts (41) gegen den Rest des Objekts (41) umfasst, und aus der Insichbewegung eine Ablösung des Teils (41d) des Objekts (41) als bevorstehende Zustandsänderung (41c) des Objekts (41) ermittelt wird (143).

7. Verfahren (100) nach einem der Ansprüche 1 bis 6, wobei in Antwort darauf, dass das Objekt (41-43) als gefährlich oder gefährdet erkannt wird (150, 160), eine für einen Fahrer des Fahrzeugs (1) physikalisch wahrnehmbare Warneinrichtung (11) aktiviert wird (170), und/oder ein Antriebssystem (12), Lenksystem (13) und/oder Bremssystem (14) des Fahrzeugs angesteuert wird (180), um eine Kollision zu vermeiden oder die Folgen einer Kollision abzumildern.

8. Verfahren (100) nach einem der Ansprüche 1 bis 7, wobei zur Erkennung von Objekten (41-43) in dem Bereich (2a), und/oder zur Segmentierung von Objekten (41-43) in einzelne Teile, zusätzlich Kamerabilder des Bereichs (2a) herangezogen werden (115).

9. Verfahren (100) nach einem der Ansprüche 1 bis 8, wobei die Analyse (130) der Ereignisse (41-43) auf gegenwärtige Bewegungen (41-43a), und/oder die Auswertung der gegenwärtigen Bewegungen (41a-43a) auf eine bevorstehende Bewegung (41b-43b) oder Zustandsänderung (41c-43c), mit einem künstlichen neuronalen Netzwerk durchgeführt wird (135).

10. Computerprogramm, enthaltend maschinenlesbare Anweisungen, die, wenn sie auf einem Computer, und/oder auf einem Steuergerät, ausgeführt werden, den Computer, und/oder das Steuergerät, dazu veranlassen, ein Verfahren (100) nach einem der Ansprüche 1 bis 9 auszuführen.

## Claims

1. Method (100) for identifying potentially hazardous or at-risk objects (41-43) in the surroundings (2) of a vehicle (1), comprising the following steps:
• a region (2a) of the surroundings (2) is captured (110) using at least one event-based sensor (3), wherein the event-based sensor (3) has light-sensitive pixels (31), and wherein a relative change in the light intensity incident on a pixel (31) by at least a predefined percentage causes the sensor (3) to output an event (31a) assigned to this pixel (31);
• events (31a) output by the sensor (3) are assigned (120) to objects (41-43) in the region (2a);
• for at least one object (41-43) to which events (31a) are assigned, the events (31a) assigned to the object (41-43) are analysed (130) for current movements (41a-43a) of the object (41-43);
• **characterized in that** an imminent movement (41b-43b) of the object (41-43) is determined (140) from the current movements (41a-43a) which are intrinsic movements,
wherein the intrinsic movements are movements which leave a position of the object as a whole unchanged in space, wherein the object (41-43) is identified (150) as potentially hazardous or at risk in response to the imminent movement (41b-43b) of the object (41-43) intersecting a current or planned trajectory (1a) of the vehicle (1) or coming closer to said trajectory than a predefined safety distance.

2. Method (100) according to Claim 1, wherein the object is not a rigid object (41) in which intrinsic movements do not occur.

3. Method (100) according to Claim 1, wherein the object is not a rigid object, depending on a road category of a road used by the vehicle.

4. Method (100) according to one of Claims 1 to 3, wherein the object (42) is a person or an animal, and the intrinsic movement (42a) is a change in the amplitude and/or frequency of a periodic movement of at least one body part of the person or animal (42) and/or a rotation of at least one body part of the person or animal (42).

5. Method (100) according to one of Claims 1 to 4, wherein the object (42) is a person, the at least one intrinsic movement (42a) is movements which indicate communication of the person (42) in a particular spatial direction, and an imminent movement (42b) of the person (42) in this spatial direction is determined (142) from the at least one intrinsic movement (42a).

6. Method (100) according to one of Claims 1 to 5, wherein the intrinsic movement (41a) comprises a movement or vibration of a part (41d) of the object (41) with respect to the rest of the object (41), and detachment of the part (41d) of the object (41) is determined (143), as an imminent state change (41c) of the object (41), from the intrinsic movement.

7. Method (100) according to one of Claims 1 to 6, wherein, in response to the object (41-43) being identified (150, 160) as hazardous or at risk, a warning device (11) which can be physically perceived by a driver of the vehicle (1) is activated (170), and/or a drive system (12), a steering system (13) and/or a braking system (14) of the vehicle is/are controlled (180) in order to avoid a collision or to mitigate the consequences of a collision.

8. Method (100) according to one of Claims 1 to 7, wherein camera images of the region (2a) are additionally used (115) to identify objects (41-43) in the region (2a) and/or to segment objects (41-43) into individual parts.

9. Method (100) according to one of Claims 1 to 8, wherein the analysis (130) of the events (41-43) for current movements (41-43a) and/or the evaluation of the current movements (41a-43a) with respect to an imminent movement (41b-43b) or a state change (41c-43c) is/are carried out (135) using an artificial neural network.

10. Computer program containing machine-readable instructions which, when executed on a computer and/or a control device, cause the computer and/or the control device to carry out a method (100) according to one of Claims 1 to 9.

## Revendications

1. Procédé (100) de reconnaissance d'objets (41-43) potentiellement dangereux ou menaçants dans l'environnement (2) d'un véhicule (1), comprenant les étapes suivantes :
• une zone (2a) de l'environnement (2) est balayée (110) avec au moins un capteur événementiel (3), le capteur événementiel (3) comportant des pixels (31) photosensibles et une variation relative d'au moins un pourcentage prédéfini de l'intensité lumineuse incidente sur un pixel (31) amenant le capteur (3) à délivrer en sortie un événement (31a) associé à ce pixel (31) ;
• des objets (41-43) dans la zone (2a) sont associés (120) aux événements (31a) délivrés en sortie par le capteur (3) ;
• pour au moins un objet (41-43) auquel sont associés des événements (31a), les événements (31a) associés à l'objet (41-43) sont analysés (130) en vue de déceler des mouvements actuels (41a-43a) de l'objet (41-43) ;
• **caractérisé en ce qu'**un mouvement prochain (41b-43b) de l'objet (41-43) est déterminé (140) à partir des mouvements actuels (41a-43a), qui sont des mouvements intrinsèques,
les mouvements intrinsèques étant des mouvements qui laissent inchangée une position de l'objet dans son ensemble dans l'espace,
l'objet (41-43) étant identifié (150) comme étant potentiellement dangereux ou en danger en réponse au fait que le mouvement prochain (41b-43b) de l'objet (41-43) croise une trajectoire actuelle ou planifiée (1a) du véhicule (1) ou s'en approche plus près qu'une distance de sécurité prédéfinie.

2. Procédé (100) selon la revendication 1, dans lequel l'objet n'est pas un objet rigide (41) dans lequel des mouvements intrinsèques ne se produisent pas.

3. Procédé (100) selon la revendication 1, dans lequel l'objet n'est pas un objet rigide en fonction d'une catégorie routière d'une route empruntée par le véhicule.

4. Procédé (100) selon l'une des revendications 1 à 3, dans lequel l'objet (42) est un être humain ou un animal, et le mouvement intrinsèque (42a) est une variation d'amplitude et/ou de fréquence d'un mouvement périodique d'au moins une partie du corps de l'être humain ou de l'animal (42), et/ou une rotation d'au moins une partie du corps de l'être humain ou de l'animal (42).

5. Procédé (100) selon l'une des revendications 1 à 4, dans lequel l'objet (42) est un être humain, le ou les mouvements intrinsèques (42a) sont des mouvements qui indiquent une communication de l'être humain (42) dans une direction spatiale donnée, et à partir du ou des mouvements intrinsèques (42a), un mouvement prochain (42b) de l'être humain (42) dans cette direction spatiale est déterminé (142).

6. Procédé (100) selon l'une des revendications 1 à 5, dans lequel le mouvement intrinsèque (41a) comprend un mouvement ou une vibration d'une partie (41d) de l'objet (41) contre le reste de l'objet (41), et une séparation de la partie (41d) de l'objet (41) est déterminée (143) à partir du mouvement intrinsèque comme étant un changement d'état (41c) prochain de l'objet (41).

7. Procédé (100) selon l'une des revendications 1 à 6, dans lequel, en réponse à l'identification (150, 160) de l'objet (41-43) comme étant dangereux ou en danger, un dispositif d'alerte (11) physiquement perceptible par un conducteur du véhicule (1) est activé (170), et/ou un système de propulsion (12), un système de direction (13) et/ou un système de freinage (14) du véhicule est commandé (180) pour éviter une collision ou réduire les conséquences d'une collision.

8. Procédé (100) selon l'une des revendications 1 à 7, dans lequel des images de caméra de la zone (2a) sont en outre utilisées (115) pour l'identification d'objets (41-43) dans la zone (2a), et/ou pour la segmentation d'objets (41-43) en parties individuelles.

9. Procédé (100) selon l'une des revendications 1 à 8, dans lequel l'analyse (130) des événements (41-43) en vue de déceler des mouvements actuels (41-43a), et/ou l'évaluation des mouvements actuels (41a-43a) en vue de déceler un mouvement prochain (41b-43b) ou un changement d'état (41c-43c), est réalisée (135) au moyen d'un réseau neuronal artificiel.

10. Programme d'ordinateur contenant des instructions lisibles par une machine qui, lorsqu'elles sont exécutées sur un ordinateur, et/ou sur un dispositif de commande, amènent l'ordinateur, et/ou le dispositif de commande, à mettre en œuvre un procédé (100) selon l'une des revendications 1 à 9.
